# EUROPEAN PATENT SPECIFICATION

(11) **EP 2 154 632 B1**
(45) Date of publication and mention of the grant of the patent: **23.05.2018**
(21) Application number: 09167660.1
(22) Date of filing: 11.08.2009
(51) Int. Cl.: G06K 9/34

(54) **Character recognition device, program and method**
Zeichenerkennungsvorrichtung, -programm und -verfahren
Dispositif de reconnaissance de caractères, programme et procédé

(30) Priority: 11.08.2008 JP 2008206722
(43) Date of publication of application: 17.02.2010
(73) Proprietor: Omron Corporation, Kyoto-shi, Kyoto 600-8530 (JP)
(72) Inventor: Aizawa, Tomoyoshi, Kyoto-shi, Kyoto 600-8530 (JP)
(74) Representative: Osha Liang

(56) References cited:
- EP-A2- 2 270 714
- US-A- 6 081 616
- US-B1- 6 535 619
- FUKUSHIMA T ET AL: "On-line writing-box-free recognition of handwritten japanese text considering character size variations", PATTERN RECOGNITION, 2000. PROCEEDINGS. 15TH INTERNATIONAL CONFERENCE ON SEPTEMBER 3-7, 2000; [PROCEEDINGS OF THE INTERNATIONAL CONFERENCE ON PATTERN RECOGNITION. (ICPR)], LOS ALAMITOS, CA, USA,IEEE COMPUT. SOC, US, vol. 2, 3 September 2000 (2000-09-03), pages 359-363, XP010533829, DOI: 10.1109/ICPR.2000.906087 ISBN: 978-0-7695-0750-7
- CASEY R G ET AL: "A SURVEY OF METHODS AND STRATEGIES IN CHARACTER SEGMENTATION", IEEE TRANSACTIONS ON PATTERN ANALYSIS AND MACHINE INTELLIGENCE, IEEE SERVICE CENTER, LOS ALAMITOS, CA, US, vol. 18, no. 7, 1 July 1996 (1996-07-01), pages 690-706, XP000620246, ISSN: 0162-8828, DOI: 10.1109/34.506792
- SARGUR N. SRIHARI, GEETHA SRIKANTAN, TAO HONG, STEPHEN W. LAM: "RESEARCH IN JAPANESE OCR" In: Horst Bunke, Patrick Shen-pei Wang: "Handbook of character recognition and document image analysis", 31 May 1997 (1997-05-31), World Scientific, XP002663562, ISBN: 981-02-2270-X pages 357-380, * Sections 1.2 and 3.3.5. *
- Hsi-Jain Lee: "Chinese Charactere Recognition in Taiwan" In: Horst Bunke, Patrick Shen-pei Wang: "Handbook of character recognition and document image analysis", 31 May 1997 (1997-05-31), World Scientific, XP002663563, ISBN: 981-02-2270-X pages 331-355, * Section 4.3 *
- MASAKI NAKAGAWA ET AL: "Recent Results of Online Japanese Handwriting Recognition and Its Applications", 27 September 2006 (2006-09-27), ARABIC AND CHINESE HANDWRITING RECOGNITION; [LECTURE NOTES IN COMPUTER SCIENCE], SPRINGER BERLIN HEIDELBERG, BERLIN, HEIDELBERG, PAGE(S) 170 - 195, XP019087055, ISBN: 978-3-540-78198-1 * Section 4.1 *

## Description

### BACKGROUND OF THE INVENTION

### 1. TECHNICAL FIELD

The present invention relates to a device for estimating a standard character width in a character string, as well as a program and a method for estimating a standard character width in a character string.

### 2. RELATED ART

A character recognition technique of acquiring character image data with an imaging unit such as digital camera or a digital scanner, and recognizing a character in the character image data has been conventionally used.

In the character recognition technique, the character is recognized by cutting out the character from a character string, and matching the cutout character with dictionary data.

In this character recognition, it is sometimes difficult to accurately cut out the character if the characters are contacting, or if the character is a separated character (e.g., " 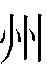 " and " 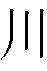 " in horizontally written character string, " 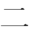 " and " 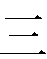 " in vertically written document, etc.) including a plurality of character elements separated in the character string direction, or a character that is originally a single character element but is separated into a plurality of character elements by thinning.

A number of methods of cutting out the character after estimating a character width so that the character can be accurately cut out even from the character string including the contacting character and the separated character have been proposed (see Japanese Unexamined Patent Publication No. 5-128308, Japanese Unexamined Patent Publication No. 5-128307, Japanese Unexamined Patent Publication No. 3-53393, Japanese Unexamined Patent Publication No. 7-271911, Japanese Unexamined Patent Publication No. 1-78395).

However, the techniques described in these patent documents still have problems.

Specifically, the character recognition device described in Japanese Unexamined Patent Publication No. 5-128308 cuts out the character on the assumption that the character width is fixed. Thus, the character recognition device cannot satisfactorily respond to the character string in which the full-width character and the half-width character are mixed.

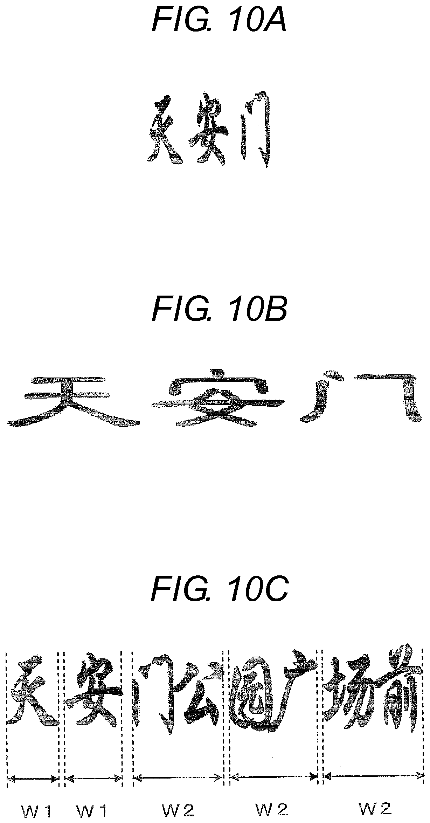

The character recognition device described in Japanese Unexamined Patent Publication No. 5-128307 prepares a predetermined character width for each of the full-width character and the half-width character, and cuts out the character. Thus, the character recognition device can satisfactorily respond to the character string in which the full-width character and the half-width character are mixed. However, the character recognition device cannot respond to an aspect ratio deformed character such as used in China. In other words, in guide plates and advertising displays, restaurant menus, and the like in China, various aspect ratio deformed characters such as the character string configured by a vertically long character, which is deformed vertically long as shown in Fig. 10A, the character string configured by a horizontally long character, which is deformed horizontally long as shown in Fig. 10B, and the like. Since the character recognition device described in Japanese Unexamined Patent Publication No. 5-128307 is based on the premise of a predetermined character width, the relevant device may not satisfactorily respond to such aspect ratio deformed character.

The character recognition device described in Japanese Unexamined Patent Publication No. 3-53393 is based on the premise of a predetermined character width, and considers both a case in which the extracted character is one character and a case in which the extracted character is two characters. However, since the predetermined character width is set forth as the premise, similar to Japanese Unexamined Patent Publication No. 5-128307, the character string including the aspect ratio deformed character such as the character string configured by a vertically long character and the character string configured by a horizontally long character cannot be satisfactorily responded.

The character recognition device described in Japanese Unexamined Patent Publication No. 7-271911 assumes that the aspect ratio of a full-width character is close to about 1:1. Thus, similar to Japanese Unexamined Patent Publication No. 5-128307 and Japanese Unexamined Patent Publication No. 3-53393, the character string including the aspect ratio deformed character such as the character string configured by a vertically long character and the character string configured by a horizontally long character cannot be satisfactorily responded.

The character recognition device described in Japanese Unexamined Patent Publication No. 1-78395 creates a histogram of a projection character width from data in which a black pixel (pixel corresponding to the character) is projected in a direction perpendicular to the character string, and sets the peak value as the character width. Thus, there is a possibility the character string including the aspect ratio deformed character such as the character string configured by a vertically long character and the character string configured by a horizontally long character may be responded. However, if the contacting characters exist as shown in Fig. 10C, the peak value reaches W2 due to the influence of the contacting characters, and the width W2 of double the actual character width W1 is estimated as the character width.
A further character recognition device is described in Fukushima T. et al., "On-line writing-box-free recognition of handwritten Japanese text considering character size variations", PATTERN RECOGNITION, 2000. PROCEEDINGS. 15TH INTERNATIONAL CONFERENCE ON SEPTEMBER 3-7, 2000; [PROCEEDINGS OF THE INTERNATIONAL CONFERENCE ON PATTERN RECOGNITION. (ICPR)], LOS ALAMITOS, CA, USA, IEEE COMPUT. SOC, US, vol. 2, September 3, 2000, pages 359 - 363, XP010533829, DOI: 10.1109/ICPR.2000.906087, ISBN: 978-0-7695-0750-7,

### SUMMARY

The present invention has been devised to solve the problems described above, and an object thereof is to provide a device for estimating a standard character width in a character string, as well as a program and a method for estimating a standard character width in a character string. The device, program and method are capable of correctly estimating a standard character width in a character string even in a character string including contacting characters and aspect ratio deformed characters.

In accordance with one aspect of the present invention, a device for estimating a standard character width in a character string includes: a character string image acquiring unit for acquiring a character string image; a measurement of character width acquiring section for acquiring measurements of character width by measuring character widths in a character string direction with respect to a plurality of characters from the character string image acquired by the character string image acquiring unit; a character provisional recognition section for provisionally recognizing characters having the measured character widths through a provisional matching process; and a standard character width determining section for determining a standard character width based on measurements of character width of the provisionally recognized characters,
wherein the standard character width is an average character width;
wherein the provisional matching process is assumed to correctly recognize a character if the matching reliability is greater than or equal to a predetermined threshold value,
wherein, if the character provisionally recognized by the provisional matching process is a combination character formed by combining two kanji radicals arranged in the character string direction of the character string image, the standard character width determining section excludes the measurement character width of the combination character from the measurement character width used to determine the standard character width,
wherein, if the character provisionally recognized by the provisional matching process is a kanji radical for forming one combination character when combined with a character either in front or back in the character string direction with respect to the character, the standard character width determining section excludes the measurement of character width of the kanji radical from the measurement of character width used to determine the standard character width, and
wherein, if the exclusion of the measurement character width of the combination character or of the kanji radical results in the measurement character width used to determine the standard character width being zero, the standard character width determining section determines the standard character width based on the character width in a direction perpendicular to the character string direction.

The character string image acquiring unit may be configured by an appropriate unit capable of acquiring images such as an imaging unit including CCD camera and CMOS camera, or an interface for receiving data of a character string image imaged with this imaging unit from the imaging unit.

The character string direction is an appropriate direction in which the characters are lined such as a vertical direction if the characters are lined in the vertical direction and a horizontal direction if the characters are lined in the horizontal direction.

The character width refers to the width of one character in the character string direction, and may be the number of pixels in the character string direction in one character.

The character provisional recognition section may be a section for extracting characteristic data from the character image, matching the characteristic data with the characteristic data of the dictionary data, and recognizing which character. When referring to provisional recognition is completed, this refers to a case where the matching reliability is obtained to an extent a correct character is assumed to be recognized.

The standard character width determining section may be configured by an appropriate section for determining the standard character width such as an average character width calculating section setting an average value of a plurality of measurement of character widths as the standard character width.

The character recognition section may be a section for extracting characteristic data from the character image, matching the characteristic data with the characteristic data of the dictionary data, and recognizing which character.

The character recognition device may be configured by an appropriate device such as a semiconductor chip including an information processing unit such as a CPU for executing information processing, an information storage unit such as a memory for storing information, and an interface unit such as a connection terminal for connecting to an external device, or an information processing terminal including a portable telephone and a PDA with an imaging unit, a control unit, and a storage unit.

According to the present invention, the estimate can be correctly performed even with respect to a character string including contacting characters and aspect ratio deformed characters.

According to the present invention, if the character provisionally recognized by the provisional matching process is one combination character formed by combining two kanji radicals arranged in the character string direction of the character string image, the average character width determining section excludes the measurement of character width of the combination character from the measurement of character width used to determine the standard character width.

The combination character is a character made up of the "hen" the left hand kanji radical and the "tsukuri" the right hand kanji radical if the character string direction is the left and right direction, and the "crown" and the "feet" if the character string direction is the up and down direction.

The kanji radical is the character corresponding to the "hen" the left hand kanji radical or the "tsukuri" the right hand kanji radical if the character string direction is the left and right direction, or the character corresponding to the "crown" and the "feet" if the character string direction is the up and down direction.

Thus, the character width worth two characters is prevented from being used as the character width of one character. More specifically, a case of provisionally recognizing, by mistake, the character string, in which two characters of the character of " 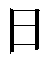 " and the character of " 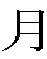 " are lined in this order, as one character of " 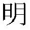 " in which " 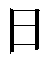 " and " 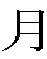 " are combined is considered. In this case, the measurement of character width of " 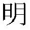 " can be excluded as the provisionally recognized " 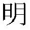 " is a combination character. Thus, the character width worth two characters of " 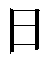 " and " 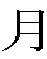 " is prevented from being mistakenly adopted as the measurement of character width of one character " 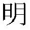 ".

According to the present invention, if the character provisionally recognized by the provisional matching process is a kanji radical for forming one combination character when combined with a character either in front or back in the character string direction with respect to the character, the standard character width determining section excludes the measurement of character width of the kanji radical from the measurement of character width used to determine the standard character width.

Thus, the measurement of character width of the kanji radical of the combination character is prevented from being mistakenly adopted as the measurement of character width of one character. More specifically, a case of provisionally recognizing as two characters " 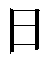 " and " 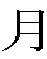 " by mistake when provisionally recognizing one character " 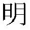 " in which " 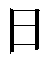 " and " 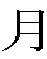 " is considered. In this case, the measurement of character width of " 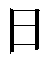 " and " 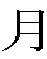 " that may be a kanji radical can be excluded. Thus, the measurement of character width of the kanji radical is prevented from being mistakenly adopted as the measurement of character width for one character.

According to one embodiment, the device further includes a character cutout section for cutting out characters in succession, starting with the first character in the character string image, to be recognized from the character string image based on the determined standard character width; and a character recognition section for actually recognizing the cutout characters through an actual matching process. The character cutout section creates projection data in which the character string image is projected in a direction perpendicular to the character string direction, and executes a first cutout process of cutting out the first character in which a provisional character width from one cut or a valley to a next cut or valley, respectively, of the projection data is within a predetermined error with respect to the standard character width; the character recognition section performs a full-width character actual matching process of being matched with a full-width character for the first cutout character as the actual matching process; if a matching reliability in the full-width character actual matching process is lower than a predetermined threshold value, the character cutout section executes a second cutout process of cutting out a half-width character in which a predetermined range from a front part of the character string and the predetermined error from a back part of the character string of the standard character width are cut off; and the character recognition section performs a half-width character actual matching process of being matched with a half-width character for the cutout character as the actual matching process. If the matching reliability in the full-width character actual matching process is higher than the predetermined threshold value, the matching character is adopted and the character recognition section assumes that the recognition is successful. The character cutout section cuts out the next character in the character string image until the adopted character is the character at the end of the character string image. The full-width character and the half-width character thus can be correctly recognized.

In one embodiment, the predetermined error may be one fourth of the standard character width.

Thus, variation in character width between the full-width characters can be appropriately responded. In other words, with character " 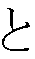 " and character " 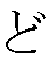 ", the character width slightly differs by the amount of the voiced sound symbol, but the variation in character width can be responded.

In another embodiment, the predetermined error may be one sixteenth of the standard character width.

Thus, characters having small character width such as "I" and "I" can be appropriately responded.

Further, in accordance with one aspect of the present invention, a program for estimating a standard character width in a character string causes a computer to execute: a character string acquiring step of acquiring a character string image with a character string image acquiring unit; a measurement of character width acquiring step of acquiring measurements of character width by measuring character widths in a character string direction with respect to a plurality of characters from the character string image; a character provisional recognition step of provisionally recognizing the characters having the measured character widths through a provisional matching process; and a standard character width determining step of determining a standard character width based on the measurements of character width of the provisionally recognized characters, wherein the standard character width is an average character width;
wherein the provisional matching process is assumed to correctly recognize a character if the matching reliability is greater than or equal to a predetermined threshold value,
wherein, if the character provisionally recognized by the provisional matching process is a combination character formed by combining two radicals arranged in the character string direction of the character string image, the standard character width determining step further includes excluding the measurement character width of the combination character from the measurement character width used to determine the standard character width,
wherein, if the character provisionally recognized by the provisional matching process is a kanji radical for forming one combination character when combined with a character either in front or back in the character string direction with respect to the character, the standard character width determining section excludes the measurement of character width of the kanji radical from the measurement of character width used to determine the standard character width, and
wherein, if the exclusion of the measurement character width of the combination character or of the kanji radical results in the measurement character width used to determine the standard character width being zero, the standard character width determining step further includes determining the standard character width based on the character width in a direction perpendicular to the character string direction.

The character recognition program may be stored in an appropriate storage medium such as CD (Compact Disc), DVD (Digital Versatile Disc), flexibility disc, memory, chip, hard disc, or the like. The character recognition program may be stored in a storage unit of a server connected to an electrical communication line such as Internet, and may be downloaded through the electrical communication line or may be used as a service of ASP (Application Service Provider) through the electrical communication line.

According to the present invention, an appropriate hardware may correctly perform the estimate even with respect to the character string including contacting characters and aspect ratio deformed characters.

Further, in accordance with one aspect of the present invention, a method for estimating a standard character width in a character string includes the steps of: acquiring a character string image with a character string image acquiring unit; acquiring measurements of character width by measuring character widths in a character string direction with respect to a plurality of characters from the character string image; provisionally recognizing the characters having the measured character widths through a provisional matching process; and determining a standard character width based on the measurements of character width of the provisionally recognized characters,
wherein the standard character width is an average character width;
wherein the provisional matching process is assumed to correctly recognize a character if the matching reliability is greater than or equal to a predetermined threshold value,
wherein, if the provisionally recognized character is a combination character formed by combining two radicals arranged in the character string direction of the character string image, determining the standard character width further includes excluding the measurement character width of the combination character from the measurement character width used to determine the standard character width,
wherein, if the character provisionally recognized by the provisional matching process is a kanji radical for forming one combination character when combined with a character either in front or back in the character string direction with respect to the character, the standard character width determining section excludes the measurement of character width of the kanji radical from the measurement of character width used to determine the standard character width, and
wherein, if the exclusion of the measurement character width of the combination character or of the kanji radical results in the measurement character width used to determine the standard character width being zero, determining the standard character width further includes determining the standard character width based on the character width in a direction perpendicular to the character string direction.

According to the present invention, there are provided the device, the program, and the method capable of correctly estimating a standard character width in a character string even with respect to a character string including contacting characters and aspect ratio deformed characters.

### BRIEF DESCRIPTION OF THE DRAWINGS

Fig. 1 is a perspective view of a portable terminal;
Fig. 2 is a block diagram of a configuration of the portable terminal;
Fig. 3 is a configuration diagram of the dictionary data used for matching of characters;
Fig. 4 is a screen configuration diagram of a recognition screen displayed on the screen display unit;
Figs. 5A to 5C are explanatory views of a mechanism for extracting a measurement of character length;
Fig. 6 is a flowchart for the character recognition function;
Fig. 7 is a flowchart for the character recognition function;
Figs. 8A to 8E are explanatory views of a process for determining the standard character length;
Figs. 9A and 9B show a full-width character cutout process of cutting out an image of a predetermined cutout range from a cutout start position; and
Figs. 10A to 10C are explanatory views of a deformed character used in restaurant menu etc. in China.

### DETAILED DESCRIPTION

Hereinafter, one embodiment of the present invention will be described with reference to the drawings.

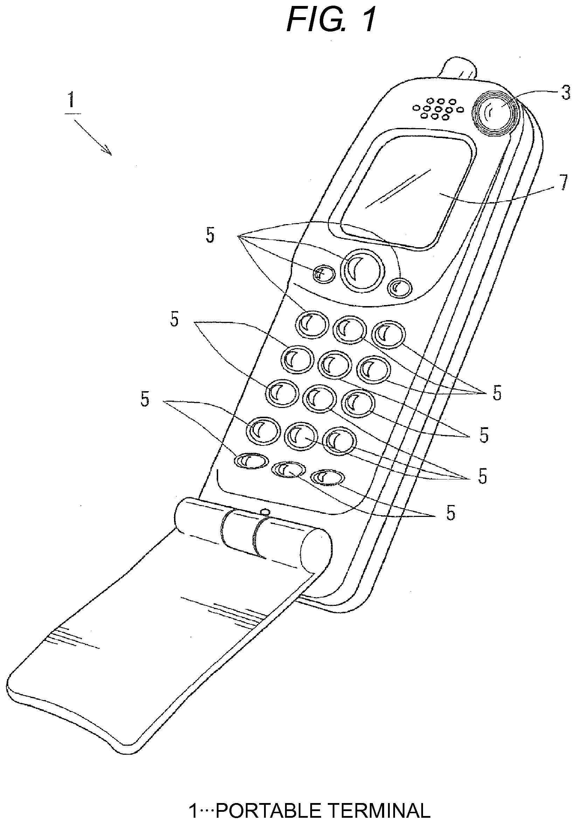

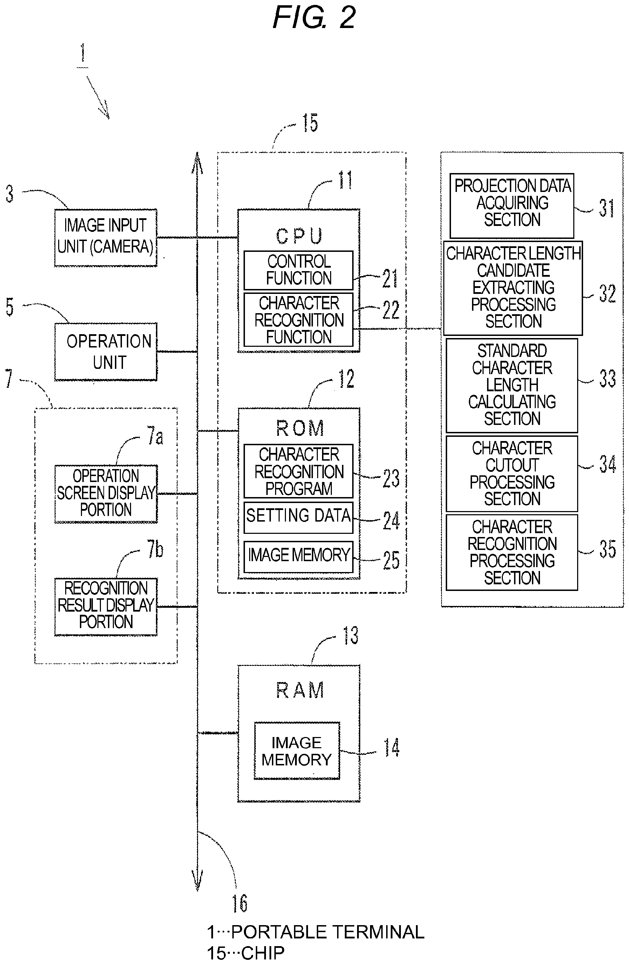

Fig. 1 shows a perspective view of a portable terminal 1, and Fig. 2 shows a block diagram of a configuration of the portable terminal 1.

As shown in Fig. 1, the portable terminal 1 includes an image input unit 3, an operation unit 5, and a screen display unit 7. The image input unit 3 is a digital camera for imaging an image, the operation unit 5 is a push-operated button, and the screen display unit 7 is a liquid crystal display or an organic EL display for displaying the image.

As shown in Fig. 2, the portable terminal 1 includes a CPU 11, a ROM 12, and a RAM 13, which are connected to a bus 16, in addition to the image input unit 3, the operation unit 5, and the screen display unit 7.

The image input unit 3 is a digital camera such as a CCD camera or a CMOS camera, and is connected to the bus 16. An imaged image obtained through imaging by the image input unit 3 is transmitted to the CPU 11 as digital image data. The digital image data may be ultimately stored in a separate storage device (non-volatile memory etc.). The image input unit 3 starts imaging in response to an imaging signal from the CPU 11.

The operation unit 5 is connected to the bus 16. The operation unit 5 transmits a push signal push-operated by the user to the CPU 11 via the bus 16.

The screen display unit 7 has a function serving as an operation screen display portion 7a for displaying an operation screen, and a function serving as a recognition result display portion 7b for displaying the character recognized recognition result. The operation screen display portion 7 is connected to the bus 16. When the image data is transmitted from the CPU 11, the image of the image data is displayed on the operation screen display portion 7a or the recognition result display portion 7b.

The CPU 11 is a processor for performing various types of operations using the RAM 13 as a temporary storage region according to a program stored in the ROM 12, and includes a control function 21 for controlling each unit and a character recognition function 22.

The character recognition function 22 has a projection data acquiring section 31, a character length candidate extracting processing section 32, a standard character length calculating section 33, a character cutout processing section 34, and a character recognition processing section 35.

The projection data acquiring section 31 acquires projection data, i.e., a histogram in which a character string image is binarized and the number of black pixels (number of pixels configuring the character) in a direction perpendicular to the character string direction are lined in the character string direction.

The character length candidate extracting processing section 32 extracts a measurement of character length that becomes a candidate of the standard character length from the projection data with a portion without the black pixel or a portion with few black pixels assumed as a cut of the characters.

The standard character length calculating section 33 calculates the standard character length from the measurement of character length.

The character cutout processing section 34 cuts out the character string at the standard character length, and separates the same into units of one character.

The character recognition processing section 35 acquires characteristic data of the character from the cutout character, and matches whether the characteristic data is matched with or is approximate to characteristic data of each character stored in the dictionary data 25 of the ROM 12.

The ROM 12 stores the character recognition program 23, the setting data 24, and the dictionary data 25. The setting data 24 stores standard character length calculating condition defining the condition for determining whether or not the character performed with a provisional matching process is the character usable in obtaining the standard character length, and the like.

The RAM 13 temporarily stores data used by the CPU 11 in various controls and calculations, and stores an image such as the character string image in an image memory 14.

The portable terminal 1 also includes a communication antenna for performing wireless communication, a speaker for performing audio output, a microphone for collecting sound, and the like. Thus, the portable terminal 1 is configured to be usable as a portable telephone.

As shown with a virtual line in the figure, the CPU 11 and the ROM 12 may be mounted on one chip 15 to be configured as an electronic component. In this case, the character recognition function can be easily added by arranging the chip 15 in the portable terminal 1.

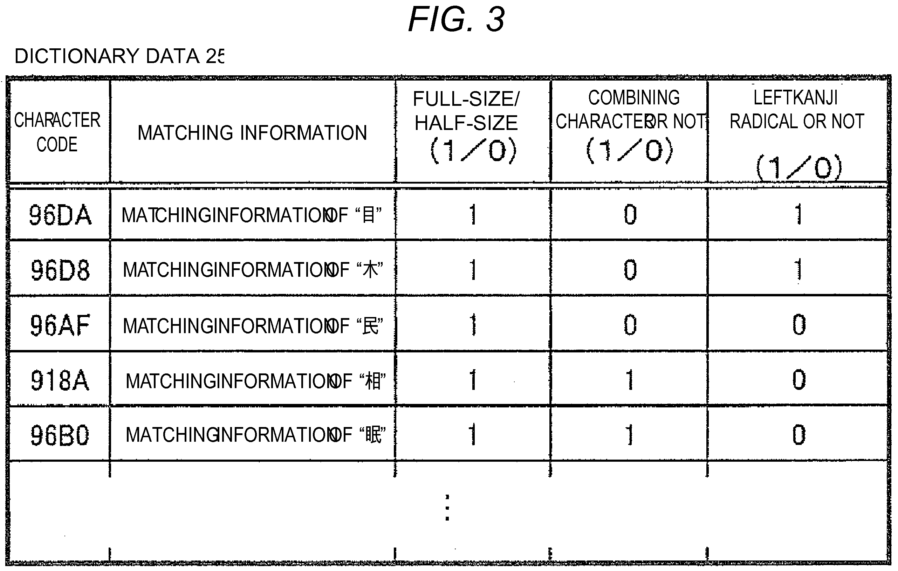

Fig. 3 is a configuration diagram of the dictionary data 25 used for matching of characters.

The dictionary data 25 is configured by each item of character code, matching information, full-width/half-width distinction, combination character distinction, and left kanji radical distinction.

The character code stores an appropriate character code such as SHIFT-JIS and UTF-8 for each character.

The matching information stores feature quantity data for each character.

The full-width/half-width distinction stores the distinction of a full-width character or a half-width character with "1"/"0".

The combination character distinction stores the distinction of a combination character or not with "1"/"0".

The left kanji radical distinction stores the distinction of whether or not the kanji radical on the left side with "1"/"0".

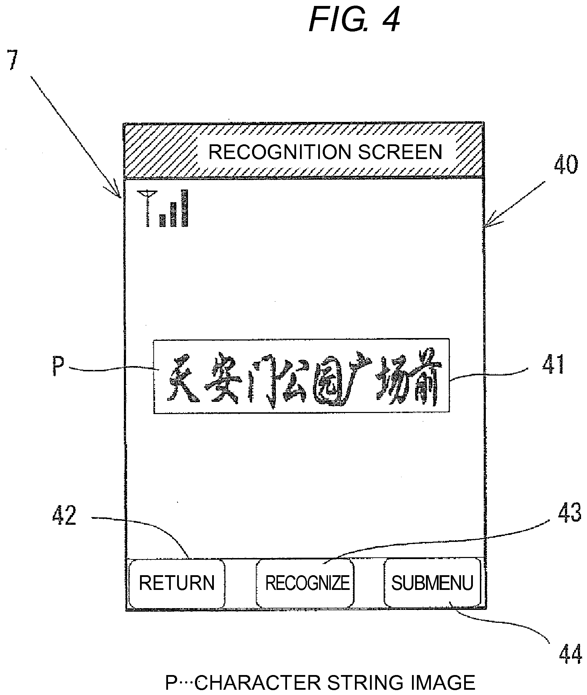

Fig. 4 is a screen configuration diagram of a recognition screen 40 displayed on the screen display unit 7.

The recognition screen 40 displays an image acquired by the image input unit 3 in an enlarged manner, and displays a character string image P to be recognized in a manner surrounded with a recognition target specifying frame 41. In the illustrated example, the characters are lined horizontally, and thus the character length is the so-called character width.

A return button 42, a recognize button 43, and a submenu button 44 are arranged at the lower side of the screen.

The return button 42 is a button for returning to the previous screen when pushed.

The recognize button 43 is a button for starting character recognition when pushed.

The submenu button 44 is a button for displaying a submenu with various functions when pushed. The submenu also displays a recognition target specifying function of arbitrarily changing the position and the range of the recognition target specifying frame 41 by the operation of the user.

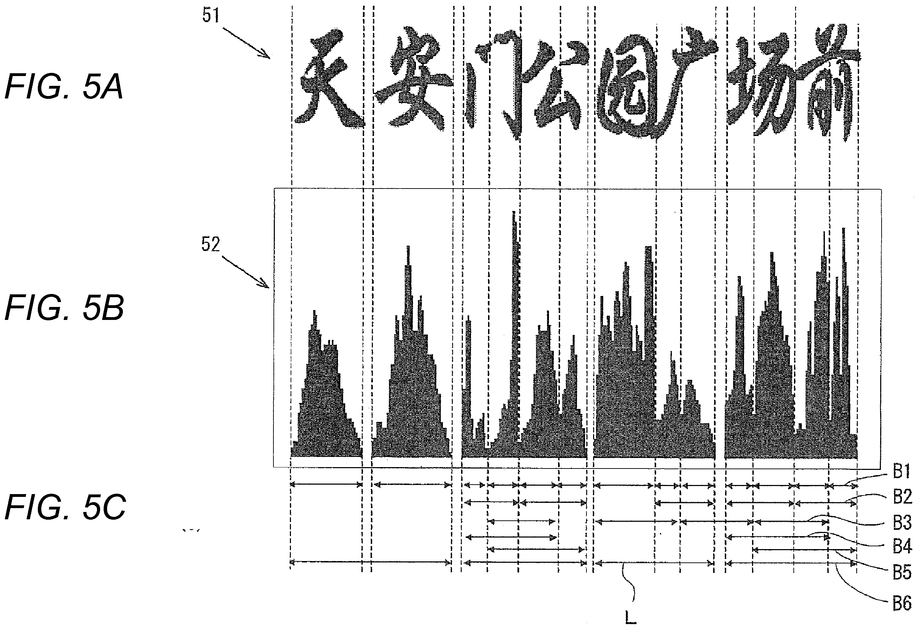

Figs. 5A to 5C are explanatory views for describing a mechanism of acquiring the projection data from the character string image, and extracting the measurement of character length.

The character string image 51 shown in Fig. 5A is binarized such that the character portion becomes black, and the number of black pixels in the direction (up and down direction in the illustrated example) perpendicular to the character string direction is lined in units of bits in the character string direction to thereby obtain the projection data 52 in which the black pixels are projected as shown in Fig. 5B.

The projection data 52 is a histogram having the number of black pixels on the vertical axis and the position in the character string direction on the horizontal axis.

As shown in the figure, the projection data 52 has the value at the position between the characters in the character string direction of zero or a very small value, where the portion of zero or a very small value has a possibility of being the border of the characters.

Various measurement of character length candidates are obtained from the border of the characters as shown in Fig. 5C. The measurement of character length L displayed at the uppermost level in Fig. 5C is in a case of assuming as the cut of the characters if the number of black pixels is smaller than or equal to a predetermined number (threshold value B1). The measurement of character length L displayed at the lowermost level is in a case of assuming as the cut of the characters only when the number of black pixels is zero (threshold value B6). The measurement of character lengths L between these are examples in which the values (threshold values B2 to B5) of the number of black pixels for assuming as the cut of the characters are differed.

The measurement of character length L having an accuracy of a certain extent is obtained by changing the threshold value B of the number of black pixels that serves as the cut of the character. However, the obtained measurement of character length L may not necessarily be exactly correct, as can be recognized from the figure. The process for obtaining the measurement of character length L having a reliability of a certain extent, and performing the character recognition of higher reliability will be described below.

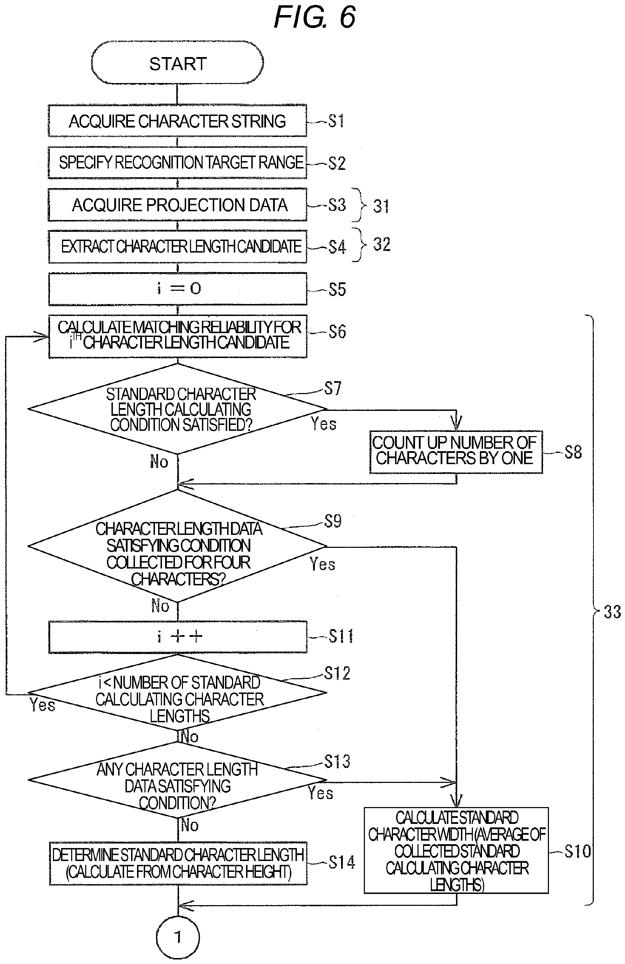

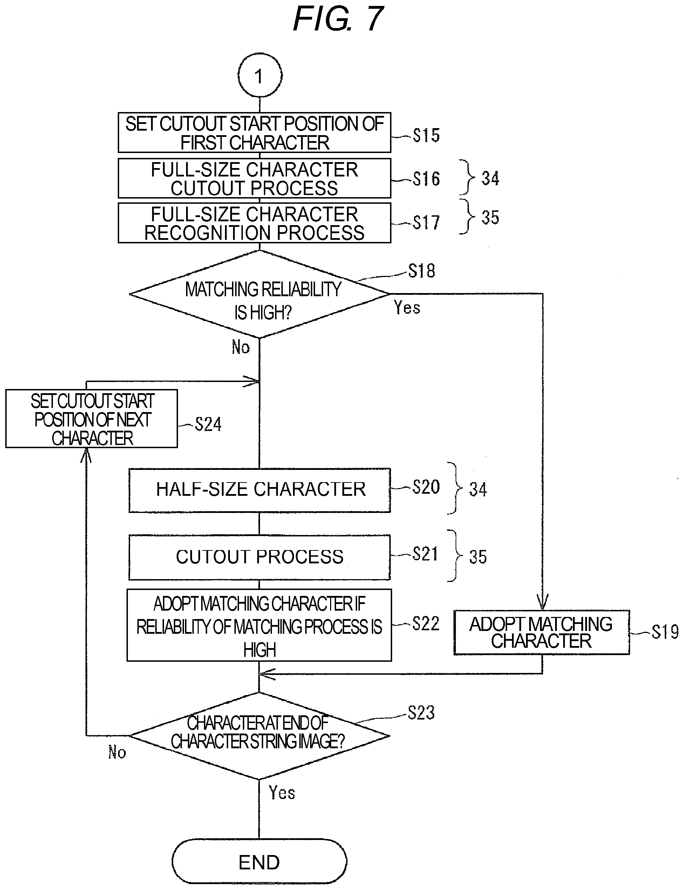

Figs. 6 and 7 show a flowchart for the character recognition function 22 executed by the CPU 11 according to the character recognition program 23 stored in the ROM 12.

The CPU 11 acquires the character image from the image input unit 3 (step S1). The character image is acquired by accepting the imaging operation of the user from the operation unit 5, executing imaging by the image input unit 3 based on the imaging operation, and data-receiving the imaged image acquired by the image input unit 3 as a character image.

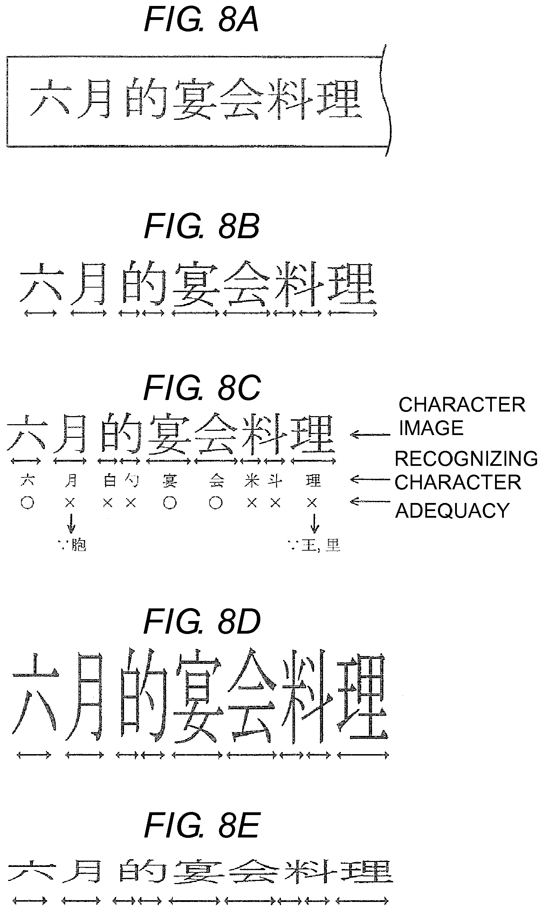

The CPU 11 displays the recognition screen 40 on the screen display unit 7, causes the user to move and operate the recognition target specifying frame 41 with the operation unit 5, and accepts the specification of the recognition target range (step S2). The subsequent description will be made taking a case where the character image " 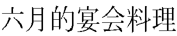 ..." is specified as the recognition target range, as shown in Fig. 8A.

The CPU 11 fulfills the function serving as the projection data acquiring section 31, and acquires the projection data 52 for the character string of the specified recognition target range (step S3).

The CPU 11 fulfills the function serving as the character length candidate extracting processing section 32, and extracts the measurement of character length from the projection data 52 (step S4). As shown in Fig. 8B, the measurement of character length is extracted with the character image divided in units of character candidates of " 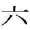 ", " 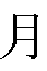 ", " 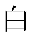 ", " 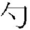 ", " 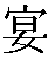 ", " 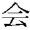 ", " 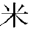 ", " 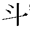 ", " 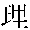 ".... The divided character candidates and the measurement of character lengths are preferably given a number in order from the left if the character string is lined horizontally, and given a number in order from the top if the character string is lined vertically.

The CPU 11 sets the variable "i" to zero, and performs initialization (step S5). A provisional matching process is performed for the character candidate existing in the i^{th} measurement of character length to calculate the matching reliability (step S6). The matching reliability is calculated by calculating the feature quantity from the character candidate, and comparing the feature quantity with the matching information of each character of the dictionary data 25. In this case, the feature quantity is compared only with the matching information of the full-width character, and the half-width character is not used. Thus, the standard character length to be ultimately calculated can be used as the character length of the full-width character, and the accuracy can be enhanced. Furthermore, the character can be provisionally recognized through the provisional matching process, and such provisionally recognized character is preferably temporarily stored.

The CPU 11 determines whether or not the calculated matching reliability satisfies the standard character length calculating condition defined in advance (step S7). The standard character length calculating condition is the condition of satisfying all of condition 1 to condition 3 below.

### [Standard character length calculating condition]

Condition 1: matching reliability is greater than or equal to a predetermined reference value
Condition 2: Character recognized through matching does not correspond to the kanji radical
Condition 3: Character recognized through matching does not correspond to the combination character

The predetermined reference value in the condition 1 can be appropriately defined to a reference value with which a correct character is assumed to be recognized.

The kanji radical of the condition 2 may be the front kanji radical that may be the front in the character string direction ("hen" the left hand kanji radical, or crown), a back kanji radical that may be the back in the character string direction ("tsukuri" the right hand kanji radical, or feet), or both.

When having the front kanji radical as the eliminating target, the front kanji radical is preferably the eliminating target only when combining the front kanji radical and the back kanji radical to form one combination character as a result of the provisional recognition of the character. The efficiency and the accuracy can thereby be enhanced.

When having the back kanji radical as the eliminating target, the back kanji radical is preferably the eliminating target only when the recognition result of the character lined on the front is combined with the back kanji radical to form one combination character as a result of the provisional recognition of the character. The efficiency and the accuracy can thereby be enhanced.

The combination character of the condition 3 is a character including "hen" the left hand kanji radical, and "tsukuri" the right hand kanji radical if the character string direction is the horizontal direction, and is a character including "crown" and "feet" if the character string direction is the vertical direction.

In the example shown in Fig. 8C, the character that can be used as the standard character length calculating condition is satisfied is " 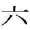 ", " 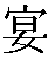 ", and " 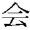 ". The other characters " 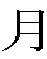 ", " 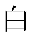 ", " 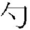 ", " 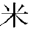 ", " 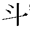 " " 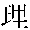 " do not satisfy the condition as corresponding to the kanji radical or the combination character.

If the standard character length calculating condition is satisfied (step S7: Yes), the CPU 11 sets the measurement of character length as the standard calculating character length, and counts up the variable "number of characters", which initial value is "0", by one (step S8).

If the standard character length calculating condition is not satisfied (step S7: No), the CPU 11 proceeds the process to step S9.

The CPU 11 determines whether or not a necessary number (e.g., for four characters) of standard calculating character lengths is collected, that is, whether the variable "number of characters" reached a predetermined number (e.g., four) (step S9).

If a necessary number of standard calculating character lengths is collected (step S9: Yes), the CPU 11 calculates the standard character length from the acquired predetermined number (e.g., four characters) of standard calculating character lengths (step S10), and proceeds the process to step S15. The standard character length is preferably an average value of the predetermined number of standard calculating character lengths. The calculated standard character length is the standard character length of a full-width character.

If a necessary number of standard calculating character lengths is not collected (step S9: No), the CPU 11 counts up the variable "i" by one (step S11), and returns the process to step S6 to repeat the processes until the variable "i" reaches the number of standard calculating character lengths (i.e., variable "number of characters") (step S12: Yes).

If the variable "i" reaches the number of standard calculating character lengths (step S12: No), it is recognized that the necessary amount of standard calculating character lengths is not collected. Thus, the CPU 11 determines whether or not one or more standard calculating character length is collected (step S13).

If one or more standard calculating character length is collected (step S13: Yes), the CPU 11 proceeds the process to step S10, calculates the average value of the collected standard calculating character lengths, and defines the calculated average value as the standard character length (step S10).

If not even one standard calculating character length is collected (step S13: No), the CPU 11 calculates the standard character length based on a default setting (step S14).

The standard character length based on the default setting assumes that the aspect ratio of the character to be read is one to one, and assumes that the length of the character in the direction perpendicular to the character string direction (character height in the example) is the standard character length. The aspect ratio is one to one because the character having the aspect ratio of one to one is generally greater in number than the character having other aspect ratios.

The CPU 11 executing steps S6 to S14 functions as the standard character length calculating section 33.

The CPU 11 sets a cutout start position for the first character of the character string image according to the defined standard character length (step S15).

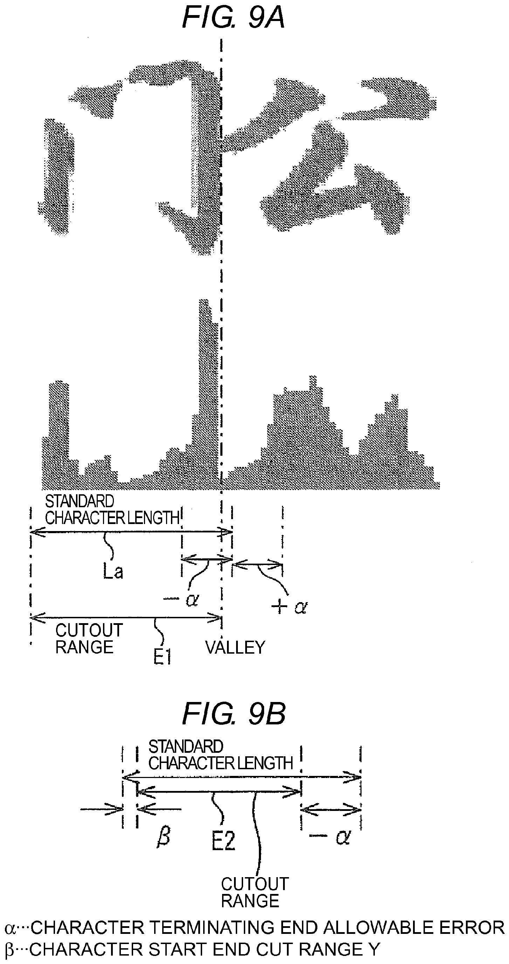

The CPU 11 functions as the character cutout processing section 34, and executes a full-width character cutout process of cutting out the image of a predetermined cutout range from the cutout start position as shown in Fig. 9A (step S16). The predetermined cutout range is the standard character length La ±α. In other words, the full-width character cutout process sets -α to +α having the position of the standard character length La as the center from the cutout start position as the search range, and defines the cut or the valley of the projection data 52 in the search range as the character terminating end side cut position. The image is cut out in the cutout range from the cutout start position to the character terminating end side cut position. Here, α is the character terminating end allowable error, and is preferably 1/4 of the standard character length La.

The CPU 11 functions as the character recognition processing section 35, and executes a full-width character recognition process on the character in the image cutout in the full-width character cutout process (step S17). The full-width character recognition process uses only the matching information in which the full-width/half-width distinction is set to full-width of the matching information stored in the dictionary data 25. The full-width character recognition process is a process of calculating the feature quantity from the cutout character image, and searching the matching information that is matched with or is most approximate to the feature quantity from the dictionary data 25.

The CPU 11 determines whether or not the matching reliability obtained in the full-width character recognition process is higher than or equal to the reference value (step S18). The reference value is set to a value having a high possibility that the recognized character is correct. If the matching reliability is higher than the reference value (step S18: Yes), the CPU 11 adopts the relevant character (step S19).

If the matching reliability is lower than the reference value (step S18: No), the CPU 11 functions as the character cutout processing section 34, and executes a half-width character cutout process (step S20). As shown in Fig. 9B, the half-width character cutout process cuts out the image such that "β < cutout range < standard character length La-α". In other words, the character start end cut range β is cut from the cutout start position in the full-width character, and then the position at the portion shorter by the character terminating end allowable error α than the standard character length La is cut, so that the half-width can be accurately cut out.

The cutting of the image worth the character start end cut range β is preferably always carried out at the position of the character start end cut range β from the cutout start position of the full-width character or at the cut or the valley of the projection 52 between the cutout start position of the full-width character to the character start end cut range β. The character start end cut range β is preferably 1/16 of the standard character length.

The cutting of the image at the "standard character length La-α", which is the character terminating end side cut position is preferably carried out at the position of the "standard character length La-α" from the cutout start position of the full-width character or at the cut or the valley of the projection data 52 in the search range, the search range being from the position of the "standard character length La-α" from the cutout start position of the full-width character to the position of the standard character length La.

After executing the half-width character cutout process, the CPU 11 functions as the character recognition processing section 35 and executes the half-width character recognition process (step S21). The half-width character recognition process uses only the matching information in which the full-width/half-width distinction is set to half-width of the matching information stored in the dictionary data 25. The half-width character recognition process is a process of calculating the feature quantity from the cutout character image, and searching the matching information that matches with or is most approximate to the feature quantity from the dictionary data 25.

If the reliability of the matching process is high, the CPU 11 adopts the matching character, and assumes that the recognition is successful for the relevant character (step S22).

The CPU 11 determines whether or not the character at the end of the character string image (step S23), where if not the character at the end (step S23: No), the CPU 11 sets the cutout start position of the next character (step S24), and returns the process to step S20 and repeats the processes. The cutout start position of the next character may be the cut position on the character terminating end side determined in the full-width character cutout process of step S16 or the half-width character cutout process of step S20.

If determined as the character at the end in step S23 (step S23: Yes), the CPU 11 terminates the process assuming that the character recognition of all the characters to be read is completed. The character recognized character may be output through an appropriate output unit such as displayed on the screen display unit 7 as the recognition result display portion 7b, or provided to a different program such as translation application.

According to the configuration and the operation described above, even the character string including contacting characters and aspect ratio deformed characters can be correctly character-recognized.

When defining the standard character length La, a condition that the matching reliability is to be more satisfactory than a certain threshold value is imposed, and thus the image in which the character is not correctly character-recognized, that is, the contacting character, in which the character is cut in the middle, or in which noise other than characters is generated can be excluded from the calculation of the standard character length La.

In addition to high matching reliability, the standard character length La is calculated excluding the character that may be a kanji radical and the character that may be a combination character, and thus the character length is prevented from being mistakenly recognized. In other words, when the character having a possibility of being an element of another character (e.g., " 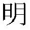 ") such as " 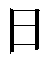 " and " 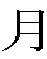 " is actually the element of another character, even if the portion of " 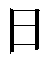 " and " 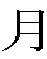 " is cut from " 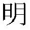 " as candidate of the character length, the standard character length La can be estimated excluding such portion.

Since the average value of a plurality of character lengths is adopted, the estimation accuracy of the character length can be enhanced.

Furthermore, since the portion that becomes the cut or the valley of the projection data 52 is set as the candidate of the character cutout coordinate in the character cutout process from the projection data 52, one character can be correctly cut out and accurately character-recognized even with respect to the character string in which the contact of the characters frequently occurs.

Both the full-width character and the half-width character can be read by executing the half-width character recognition process if not correctly recognized in the full-width character recognition process using the character terminating end allowable error α and the character start end cut range β.

Since the values of the character terminating end allowable error α and the character start end cut range β are determined with the ratio with respect to the standard character length La, the character can be appropriately recognized regardless of the difference in the size (aspect ratio) such as whether the character string to be read is vertically long (see Fig. 8D) or horizontally long (see Fig. 8E).

As the character start end cut range β is 1/16 of the standard character length, characters having small character width such as "I" and "I" can be appropriately responded.

The standard character length La is determined at the time point of acquiring a predetermined number (e.g., four) of measurement of character lengths that can be adopted and the subsequent provisional recognition is not performed, and the actual recognition is performed using the standard character length La, whereby the time necessary for the character recognition can be reduced and the accuracy of the character recognition can be enhanced.

In correspondence of the configuration of the invention and the above-described embodiment,
the character recognition device of the invention corresponds to the portable terminal 1 or the chip 15 of the embodiment, and similarly,
a character string image acquiring unit corresponds to the CPU 11 executing step S1,
a measurement of character length acquiring section corresponds to the character length candidate extracting processing section 32,
a character provisional recognition section corresponds to the standard character length calculating section 33 executing step S6,
a standard character length determining section corresponds to the standard character length calculating section 33,
a character cutout section corresponds to the character cutout processing section 34,
a character recognition section corresponds to the character recognition processing section 35,
a provisional character length corresponds to the cutout range E1,
a reduced character length corresponds to the cutout range E2,
a predetermined error corresponds to the character terminating end allowable error α,
a predetermined range corresponds to the character start end cut range β,
a predetermined threshold value corresponds to the reference value,
a character string acquiring step corresponds to step S1,
a measurement of character length acquiring step corresponds to step S4,
provisional matching process, provisional recognition, and character provisional recognition steps correspond to step S6,
a standard character length determining step corresponds to steps S6 to S14,
a first cutout process corresponds to step S16,
a full-width character actual matching process corresponds to step S17,
a character cutout step corresponds to steps S16, S20,
a character recognition step and an actual matching process correspond to steps S17, S21,
a second cutout process corresponds to step S20, and
a half-width character actual matching process corresponds to step S21, where
the present invention is not limited to only the configuration of the above-described embodiment, and further embodiments can be envisaged.

## Claims

1. A device for estimating a standard character width in a character string, the device comprising:
a character string image acquiring unit for acquiring a character string image;
a measurement of character width acquiring section for acquiring measurements of character width by measuring character widths in a character string direction with respect to a plurality of characters from the character string image acquired by the character string image acquiring unit;
a character provisional recognition section for provisionally recognizing characters having the measured character widths through a provisional matching process; and
a standard character width determining section for determining a standard character width based on the measurements of character width of the provisionally recognized characters, wherein the standard character width is an average character width;
wherein the provisional matching process is assumed to correctly recognize a character if the matching reliability is greater than or equal to a predetermined threshold value,
wherein, if the character provisionally recognized by the provisional matching process is a combination character formed by combining two kanji radicals arranged in the character string direction of the character string image, the standard character width determining section excludes the measurement character width of the combination character from the measurement character width used to determine the standard character width,
wherein, if the character provisionally recognized by the provisional matching process is a kanji radical for forming one combination character when combined with a character either in front or back in the character string direction with respect to the character, the standard character width determining section excludes the measurement of character width of the kanji radical from the measurement of character width used to determine the standard character width, and
wherein, if the exclusion of the measurement character width of the combination character or of the kanji radical results in the measurement character width used to determine the standard character width being zero, the standard character width determining section determines the standard character width based on the character width in a direction perpendicular to the character string direction.

2. The device according to claim 1, further comprising:
a character cutout section for cutting out characters in succession, starting with the first character in the character string image, to be recognized from the character string image based on the determined standard character width; and
a character recognition section for actually recognizing the cutout characters through an actual matching process,
wherein
the character cutout section creates projection data in which the character string image is projected in a direction perpendicular to the character string direction, and executes a first cutout process of cutting out the first character in which a provisional character width from one cut or a valley to a next cut or valley, respectively, of the projection data is within a predetermined error with respect to the standard characterwidth;
the character recognition section performs a full-width character actual matching process of being matched with a full-width character for the first cutout character as the actual matching process;
if a matching reliability in the full-width character actual matching process is lower than a predetermined threshold value, the character cutout section executes a second cutout process of cutting out a half-width character in which a predetermined range from a front part of the character and the predetermined error from a back part of the character of the standard character width are cut off;
the character recognition section performs a half-width character actual matching process of being matched with a half-width character for the cutout character as the actual matching process;
if the matching reliability in the full-width character actual matching process is higher than the predetermined threshold value, the matching character is adopted and the character recognition section assumes that the recognition is successful; and
the character cutout section cuts out the next character in the character string image until the adopted character is the character at the end of the character string image.

3. The device according to claim 2, wherein the predetermined error is one fourth of the standard character width.

4. The device according to claim 2, wherein the predetermined error is one sixteenth of the standard character width.

5. A program for estimating a standard character width in a character string for causing a computer to execute:
a character string acquiring step of acquiring a character string image with a character string image acquiring unit;
a measurement of character width acquiring step of acquiring measurements of character width by measuring character widths in a character string direction with respect to a plurality of characters from the character string image;
a character provisional recognition step of provisionally recognizing the characters having the measured character widths through a provisional matching process; and
a standard character width determining step of determining a standard character width based on the measurements of character width of the provisionally recognized characters, wherein the standard character width is an average character width;
wherein the provisional matching process is assumed to correctly recognize a character if the matching reliability is greater than or equal to a predetermined threshold value,
wherein, if the character provisionally recognized by the provisional matching process is a combination character formed by combining two radicals arranged in the character string direction of the character string image, the standard character width determining step further includes excluding the measurement character width of the combination character from the measurement character width used to determine the standard character width,
wherein, if the character provisionally recognized by the provisional matching process is a kanji radical for forming one combination character when combined with a character either in front or back in the character string direction with respect to the character, the standard character width determining section excludes the measurement of character width of the kanji radical from the measurement of character width used to determine the standard character width, and
wherein, if the exclusion of the measurement character width of the combination character or of the kanji radical results in the measurement character width used to determine the standard character width being zero, the standard character width determining step further includes determining the standard character width based on the character width in a direction perpendicular to the character string direction.

6. The program according to claim 5, for causing a computer to further execute:
a character cutout step of cutting out characters in succession, starting with the first character in the character string image, to be recognized from the character string image based on the determined standard character width; and
a character recognition step of actually recognizing the cutout characters through an actual matching process,
wherein
the character cutout step comprises creating projection data in which the character string image is projected in a direction perpendicular to the character string direction, and executing a first cutout process of cutting out the first character in which a provisional character width from one cut or a valley to a next cut or valley, respectively, of the projection data is within a predetermined error with respect to the standard character width;
the character recognition step comprises performing a full-width character matching process of being matched with a full-width character for the first cutout character as the actual matching process;
if a matching reliability in the full-width character actual matching process is lower than a predetermined threshold value, the character cutout step comprises executing a second cutout process of cutting out a half-width character in which a predetermined range from a front part of the character and the predetermined error from a back part of the character of the standard character width are cut off;
the character recognition step comprises performing a half-width character actual matching process of being matched with a half-width character for the cutout character as the actual matching process;
if the matching reliability in the full-width character actual matching process is higher than the predetermined threshold value, the matching character is adopted and the character recognition step comprises assuming that the recognition is successful; and
the character cutout step comprises cutting out the next character in the character string image until the adopted character is the character at the end of the character string image.

7. A method for estimating a standard character width in a character string, the method comprising the steps of:
acquiring a character string image with a character string image acquiring unit; acquiring measurements of character width by measuring character widths in a character string direction with respect to a plurality of characters from the character string image;
provisionally recognizing the characters having the measured character widths through a provisional matching process; and
determining a standard character width based on the measurements of character width of the provisionally recognized characters, wherein the standard character width is an average character width;
wherein the provisional matching process is assumed to correctly recognize a character if the matching reliability is greater than or equal to a predetermined threshold value,
wherein, if the provisionally recognized character is a combination character formed by combining two radicals arranged in the character string direction of the character string image, determining the standard character width further includes excluding the measurement character width of the combination character from the measurement character width used to determine the standard character width,
wherein, if the character provisionally recognized by the provisional matching process is a kanji radical for forming one combination character when combined with a character either in front or back in the character string direction with respect to the character, the standard character width determining section excludes the measurement of character width of the kanji radical from the measurement of character width used to determine the standard character width, and
wherein, if the exclusion of the measurement character width of the combination character or of the kanji radical results in the measurement character width used to determine the standard character width being zero, determining the standard character width further includes determining the standard character width based on the character width in a direction perpendicular to the character string direction.

8. The method according to claim 7, further comprising:
cutting out characters in succession, starting with the first character in the character string image, to be recognized from the character string image based on the determined standard character width; and
actually recognizing the cutout characters through an actual matching process,
wherein
cutting out comprises creating projection data in which the character string image is projected in a direction perpendicular to the character string direction, and executing a first cutout process of cutting out the first character in which a provisional character width from one cut or a valley to a next cut or valley, respectively, of the projection data is within a predetermined error with respect to the standard character width;
recognizing comprises performing a full-width character actual matching process of being matched with a full-width character for the first cutout character as the actual matching process;
if a matching reliability in the full-width character actual matching process is lower than a predetermined threshold value, cutting out comprises executing a second cutout process of cutting out a half-width character in which a predetermined range from a front part of the character and the predetermined error from a back part of the character of the standard character width are cut off;
recognizing comprises performing a half-width character actual matching process of being matched with a half-width character for the cutout character as the actual matching process;
if the matching reliability in the full-width character actual matching process is higher than the predetermined threshold value, adopting the matching character and assuming that the recognition is successful; and
cutting out the next character in the character string image until the adopted character is the character at the end of the character string image.

## Patentansprüche

1. Vorrichtung zum Schätzen einer Standardzeichenbreite in einer Zeichenkette, wobei die Vorrichtung umfasst:
eine Zeichenkettenbild-Erfassungseinheit zum Erfassen eines Zeichenkettenbilds; einen Abschnitt zum Erfassen eines Messwertes einer Zeichenbreite zum Erfassen von Messwerten einer Zeichenbreite durch Messen von Zeichenbreiten in einer Zeichenkettenrichtung in Bezug auf mehrere Zeichen aus dem durch die Zeichenkettenbild-Erfassungseinheit erfassten Zeichenkettenbild;
einen Abschnitt zur vorläufigen Zeichenerkennung zum vorläufigen Erkennen von Zeichen mit den gemessenen Zeichenbreiten durch einen vorläufigen Übereinstimmungsprüfungsprozess; und
einen Standardzeichenbreiten-Bestimmungsabschnitt zum Bestimmen einer Standardzeichenbreite auf der Grundlage der Messwerte der Zeichenbreite der vorläufig erkannten Zeichen, wobei die Standardzeichenbreite eine durchschnittliche Zeichenbreite ist;
wobei angenommen wird, dass der vorläufige Übereinstimmungsprüfungsprozess ein Zeichen richtig erkennt, falls die Übereinstimmungszuverlässigkeit größer oder gleich einem vorgegebenen Schwellenwert ist,
wobei der Standardzeichenbreiten-Bestimmungsabschnitt den Messwert der Zeichenbreite des Kombinationszeichens aus dem zum Bestimmen der Standardzeichenbreite verwendeten Messwert der Zeichenbreite ausschließt, falls das durch den vorläufigen Übereinstimmungsprüfungsprozess vorläufig erkannte Zeichen ein durch Kombinieren zweier in der Zeichenkettenrichtung des Zeichenkettenbilds angeordneter Kanji-Radikale gebildetes Kombinationszeichen ist,
wobei der Standardzeichenbreiten-Bestimmungsabschnitt den Messwert der Zeichenbreite des Kanji-Radikals aus dem zum Bestimmen der Standardzeichenbreite verwendeten Messwert der Zeichenbreite ausschließt, falls das durch den vorläufigen Übereinstimmungsprüfungsprozess vorläufig erkannte Zeichen ein Kanji-Radikal zum Bilden eines Kombinationszeichens, wenn es mit einem Zeichen entweder davor oder dahinter in der Zeichenkettenrichtung in Bezug auf das Zeichen kombiniert wird, ist, und
wobei der Standardzeichenbreiten-Bestimmungsabschnitt die Standardzeichenbreite auf der Grundlage der Zeichenbreite in einer Richtung senkrecht zu der Zeichenkettenrichtung bestimmt, falls der Ausschluss des Messwerts der Zeichenbreite des Kombinationszeichens oder des Kanji-Radikals dazu führt, dass der zum Bestimmen der Standardzeichenbreite verwendete Messwert der Zeichenbreite null ist.

2. Vorrichtung nach Anspruch 1, die ferner umfasst:
einen Zeichenausschneideabschnitt zum aufeinanderfolgenden Ausschneiden von Zeichen, beginnend mit dem ersten Zeichen in dem Zeichenkettenbild, das auf der Grundlage der bestimmten Standardzeichenbreite aus dem Zeichenkettenbild erkannt werden soll; und
einen Zeichenerkennungsabschnitt zum tatsächlichen Erkennen der ausgeschnittenen Zeichen durch einen tatsächlichen Übereinstimmungsprüfungsprozess,
wobei
der Zeichenausschneideabschnitt Projektionsdaten erzeugt, in denen das Zeichenkettenbild in einer Richtung senkrecht zu der Zeichenkettenrichtung projiziert wird, und einen ersten Ausschneideprozess des Ausschneidens des ersten Zeichens, in dem eine vorläufige Zeichenbreite von einem Schnitt oder einem Tal zu dem nächsten Schnitt bzw. Tal der Projektionsdaten innerhalb eines vorgegebenen Fehlers in Bezug auf die Standardzeichenbreite liegt, ausführt;
der Zeichenerkennungsabschnitt als den tatsächlichen Übereinstimmungsprüfungsprozess für das erste ausgeschnittene Zeichen einen tatsächlichen Übereinstimmungsprüfungsprozess des Zeichens mit voller Breite, in dem seine Übereinstimmung mit einem Zeichen voller Breite geprüft wird, ausführt;
der Zeichenausschneideabschnitt einen zweiten Ausschneideprozess des Ausschneidens eines Zeichens mit halber Breite, in dem ein vorgegebener Bereich von einem vorderen Teil des Zeichens und der vorgegebene Fehler von dem hinteren Teil des Zeichens mit der Standardzeichenbreite ausgeschnitten werden, ausführt, falls eine Übereinstimmungsprüfüngszuverlässigkeit in dem tatsächlichen Übereinstimmungsprüfungsprozess des Zeichens mit voller Breite niedriger als ein vorgegebener Schwellenwert ist;
der Zeichenerkennungsabschnitt als den tatsächlichen Übereinstimmungsprüfungsprozess für das ausgeschnittene Zeichen einen tatsächlichen Übereinstimmungsprüfungsprozess des Zeichens mit halber Breite, in dem seine Übereinstimmung mit einem Zeichen mit halber Breite geprüft wird, ausführt;
das übereinstimmende Zeichen verwendet wird und der Zeichenerkennungsabschnitt annimmt, dass die Erkennung erfolgreich ist, falls die Übereinstimmungsprüfüngszuverlässigkeit in dem tatsächlichen Übereinstimmungsprüfungsprozess des Zeichens mit voller Breite höher als der vorgegebene Schwellenwert ist; und
der Zeichenausschneideabschnitt das nächste Zeichen in dem Zeichenkettenbild ausschneidet, bis das verwendete Zeichen das Zeichen am Ende des Zeichenkettenbilds ist.

3. Vorrichtung nach Anspruch 2, wobei der vorgegebene Fehler ein Viertel der Standardzeichenbreite ist.

4. Vorrichtung nach Anspruch 2, wobei der vorgegebene Fehler ein Sechzehntel der Standardzeichenbreite ist.

5. Programm zum Schätzen einer Standardzeichenbreite in einer Zeichenkette, um zu veranlassen, dass ein Computer Folgendes ausführt:
einen Zeichenkettenbild-Erfassungsschritt zum Erfassen eines Zeichenkettenbilds mit einer Zeichenkettenbild-Erfassungseinheit;
einen Schritt zum Erfassen eines Messwertes einer Zeichenbreite zum Erfassen von Messwerten einer Zeichenbreite durch Messen von Zeichenbreiten in einer Zeichenkettenrichtung in Bezug auf mehrere Zeichen aus dem Zeichenkettenbild;
einen Schritt zur vorläufigen Zeichenerkennung zum vorläufigen Erkennen der Zeichen mit den gemessenen Zeichenbreiten durch einen vorläufigen Übereinstimmungsprüfungsprozess; und
einen Standardzeichenbreiten-Bestimmungsschritt zum Bestimmen einer Standardzeichenbreite auf der Grundlage der Messwerte der Zeichenbreite der vorläufig erkannten Zeichen, wobei die Standardzeichenbreite eine durchschnittliche Zeichenbreite ist;
wobei angenommen wird, dass der vorläufige Übereinstimmungsprüfungsprozess ein Zeichen richtig erkennt, falls die Übereinstimmungszuverlässigkeit größer oder gleich einem vorgegebenen Schwellenwert ist,
wobei der Standardzeichenbreiten-Bestimmungsschritt ferner das Ausschließen des Messwerts der Zeichenbreite des Kombinationszeichens aus dem zum Bestimmen der Standardzeichenbreite verwendeten Messwert der Zeichenbreite enthält, falls das durch den vorläufigen Übereinstimmungsprüfungsprozess vorläufig erkannte Zeichen ein durch Kombinieren zweier in der Zeichenkettenrichtung des Zeichenkettenbilds angeordneter Radikale gebildetes Kombinationszeichen ist,
wobei der Standardzeichenbreiten-Bestimmungsabschnitt den Messwert der Zeichenbreite des Kanji-Radikals aus dem zum Bestimmen der Standardzeichenbreite verwendeten Messwert der Zeichenbreite ausschließt, falls das durch den vorläufigen Übereinstimmungsprüfungsprozess vorläufig erkannte Zeichen ein Kanji-Radikal zum Bilden eines Kombinationszeichens, wenn es mit einem Zeichen entweder davor oder dahinter in der Zeichenkettenrichtung in Bezug auf das Zeichen kombiniert wird, ist, und
wobei der Standardzeichenbreiten-Bestimmungsschritt ferner das Bestimmen der Standardzeichenbreite auf der Grundlage der Zeichenbreite in einer Richtung senkrecht zu der Zeichenkettenrichtung enthält, falls der Ausschluss des Messwerts der Zeichenbreite des Kombinationszeichens oder des Kanji-Radikals dazu führt, dass der zum Bestimmen der Standardzeichenbreite verwendete Messwert der Zeichenbreite null ist.

6. Programm nach Anspruch 5, um zu veranlassen, dass ein Computer ferner Folgendes ausführt:
einen Zeichenausschneideschritt zum aufeinanderfolgenden Ausschneiden von Zeichen, beginnend mit dem ersten Zeichen in dem Zeichenkettenbild, das auf der Grundlage der bestimmten Standardzeichenbreite aus dem Zeichenkettenbild erkannt werden soll; und
einen Zeichenerkennungsschritt zum tatsächlichen Erkennen der ausgeschnittenen Zeichen durch einen tatsächlichen Übereinstimmungsprüfungsprozess,
wobei
der Zeichenausschneideschritt das Erzeugen von Projektionsdaten, in denen das Zeichenkettenbild in einer Richtung senkrecht zu der Zeichenkettenrichtung projiziert wird, und das Ausführen eines ersten Ausschneideprozesses des Ausschneidens des ersten Zeichens, in dem eine vorläufige Zeichenbreite von einem Schnitt oder einem Tal zu dem nächsten Schnitt bzw. Tal der Projektionsdaten innerhalb eines vorgegebenen Fehlers in Bezug auf die Standardzeichenbreite liegt, umfasst;
der Zeichenerkennungsschritt das Ausführen eines Übereinstimmungsprüfungsprozesses des Zeichens mit voller Breite, in dem seine Übereinstimmung mit einem Zeichen voller Breite geprüft wird, als den tatsächlichen Übereinstimmungsprüfungsprozess für das erste ausgeschnittene Zeichen umfasst;
der Zeichenausschneideschritt das Ausführen eines zweiten Ausschneideprozesses des Ausschneidens eines Zeichens mit halber Breite, in dem ein vorgegebener Bereich von einem vorderen Teil des Zeichens und der vorgegebene Fehler von dem hinteren Teil des Zeichens mit der Standardzeichenbreite ausgeschnitten werden, umfasst, falls eine Übereinstimmungsprüfüngszuverlässigkeit in dem tatsächlichen Übereinstimmungsprüfungsprozess des Zeichens mit voller Breite niedriger als ein vorgegebener Schwellenwert ist;
der Zeichenerkennungsschritt das Ausführen eines tatsächlichen Übereinstimmungsprüfungsprozesses des Zeichens mit halber Breite, in dem seine Übereinstimmung mit einem Zeichen mit halber Breite geprüft wird, als den tatsächlichen Übereinstimmungsprüfungsprozess für das ausgeschnittene Zeichen umfasst;
das übereinstimmende Zeichen verwendet wird und der Zeichenerkennungsschritt annimmt, dass die Erkennung erfolgreich ist, falls die Übereinstimmungsprüfungszuverlässigkeit in dem tatsächlichen Übereinstimmungsprüfungsprozess des Zeichens mit voller Breite höher als der vorgegebene Schwellenwert ist; und
der Zeichenausschneideschritt das Ausschneiden des nächsten Zeichens in dem Zeichenkettenbild umfasst, bis das verwendete Zeichen das Zeichen am Ende des Zeichenkettenbilds ist.

7. Verfahren zum Schätzen einer Standardzeichenbreite in einer Zeichenkette, wobei das Verfahren die folgenden Schritte umfasst:
Erfassen eines Zeichenkettenbilds mit einer Zeichenkettenbild-Erfassungseinheit;
Erfassen von Messwerten einer Zeichenbreite durch Messen von Zeichenbreiten in einer Zeichenkettenrichtung in Bezug auf mehrere Zeichen aus dem Zeichenkettenbild;
vorläufiges Erkennen der Zeichen mit den gemessenen Zeichenbreiten durch einen vorläufigen Übereinstimmungsprüfungsprozess; und
Bestimmen einer Standardzeichenbreite auf der Grundlage der Messwerte der Zeichenbreite der vorläufig erkannten Zeichen, wobei die Standardzeichenbreite eine durchschnittliche Zeichenbreite ist;
wobei angenommen wird, dass der vorläufige Übereinstimmungsprüfungsprozess ein Zeichen richtig erkennt, falls die Übereinstimmungszuverlässigkeit größer oder gleich einem vorgegebenen Schwellenwert ist,
wobei das Bestimmen der Standardzeichenbreite ferner das Ausschließen des Messwerts der Zeichenbreite des Kombinationszeichens aus dem zum Bestimmen der Standardzeichenbreite verwendeten Messwert der Zeichenbreite enthält, falls das vorläufig erkannte Zeichen ein durch Kombinieren zweier in der Zeichenkettenrichtung des Zeichenkettenbilds angeordneter Radikale gebildetes Kombinationszeichen ist,
wobei der Standardzeichenbreiten-Bestimmungsabschnitt den Messwert der Zeichenbreite des Kanji-Radikals aus dem zum Bestimmen der Standardzeichenbreite verwendeten Messwert der Zeichenbreite ausschließt, falls das durch den vorläufigen Übereinstimmungsprüfungsprozess vorläufig erkannte Zeichen ein Kanji-Radikal zum Bilden eines Kombinationszeichens, wenn es mit einem Zeichen entweder davor oder dahinter in der Zeichenkettenrichtung in Bezug auf das Zeichen kombiniert wird, ist, und
wobei das Bestimmen der Standardzeichenbreite ferner das Bestimmen der Standardzeichenbreite auf der Grundlage der Zeichenbreite in einer Richtung senkrecht zu der Zeichenkettenrichtung enthält, falls der Ausschluss des Messwerts der Zeichenbreite des Kombinationszeichens oder des Kanji-Radikals dazu führt, dass der zum Bestimmen der Standardzeichenbreite verwendete Messwert der Zeichenbreite null ist.

8. Verfahren nach Anspruch 7, das ferner umfasst:
aufeinanderfolgendes Ausschneiden von Zeichen, beginnend mit dem ersten Zeichen in dem Zeichenkettenbild, das auf der Grundlage der bestimmten Standardzeichenbreite aus dem Zeichenkettenbild erkannt werden soll; und
tatsächliches Erkennen der ausgeschnittenen Zeichen durch einen tatsächlichen Übereinstimmungsprüfungsprozess,
wobei
das Ausschneiden das Erzeugen von Projektionsdaten, in denen das Zeichenkettenbild in einer Richtung senkrecht zu der Zeichenkettenrichtung projiziert wird, und das Ausführen eines ersten Ausschneideprozesses des Ausschneidens des ersten Zeichens, in dem eine vorläufige Zeichenbreite von einem Schnitt oder einem Tal zu dem nächsten Schnitt bzw. Tal der Projektionsdaten innerhalb eines vorgegebenen Fehlers in Bezug auf die Standardzeichenbreite liegt, umfasst;
das Erkennen das Ausführen eines tatsächlichen Übereinstimmungsprüfungsprozesses des Zeichens mit voller Breite, in dem seine Übereinstimmung mit einem Zeichen voller Breite geprüft wird, als den tatsächlichen Übereinstimmungsprüfungsprozess für das erste ausgeschnittene Zeichen umfasst;
das Ausschneiden das Ausführen eines zweiten Ausschneideprozesses des Ausschneidens eines Zeichens mit halber Breite, in dem ein vorgegebener Bereich von einem vorderen Teil des Zeichens und der vorgegebene Fehler von dem hinteren Teil des Zeichens mit der Standardzeichenbreite ausgeschnitten werden, umfasst, falls eine Übereinstimmungsprüfüngszuverlässigkeit in dem tatsächlichen Übereinstimmungsprüfungsprozess des Zeichens mit voller Breite niedriger als ein vorgegebener Schwellenwert ist;
das Erkennen das Ausführen eines tatsächlichen Übereinstimmungsprüfungsprozesses des Zeichens mit halber Breite, in dem seine Übereinstimmung mit einem Zeichen mit halber Breite geprüft wird, als den tatsächlichen Übereinstimmungsprüfungsprozess für das ausgeschnittene Zeichen umfasst;
das übereinstimmende Zeichen verwendet wird und angenommen wird, dass die Erkennung erfolgreich ist, falls die Übereinstimmungsprüfüngszuverlässigkeit in dem tatsächlichen Übereinstimmungsprüfungsprozess des Zeichens mit voller Breite höher als der vorgegebene Schwellenwert ist; und
das nächste Zeichen in dem Zeichenkettenbild ausgeschnitten wird, bis das verwendete Zeichen das Zeichen am Ende des Zeichenkettenbilds ist.

## Revendications

1. Dispositif d'estimation d'une largeur de caractère standard dans une chaîne de caractères, le dispositif comprenant :
une unité d'acquisition d'image de chaîne de caractères pour acquérir une image de chaîne de caractères ;
une section d'acquisition de mesure de largeur de caractère pour acquérir des mesures de largeur de caractère en mesurant des largeurs de caractère dans un sens de chaîne de caractères par rapport à une pluralité de caractères à partir de l'image de chaîne de caractères acquise par l'unité d'acquisition d'image de chaîne de caractères ;
une section de reconnaissance provisoire de caractère pour reconnaître provisoirement des caractères ayant les largeurs de caractère mesurées par l'intermédiaire d'un processus de correspondance provisoire ; et
une section de détermination de largeur de caractère standard pour déterminer une largeur de caractère standard sur la base des mesures de largeur de caractère des caractères provisoirement reconnus, dans laquelle la largeur de caractère standard est une largeur de caractère moyenne ;
dans lequel le processus de correspondance provisoire est censé reconnaître correctement un caractère si la fiabilité de correspondance est supérieure ou égale à une valeur de seuil prédéterminée,
dans lequel, si le caractère provisoirement reconnu par le processus de correspondance provisoire est un caractère de combinaison formé par la combinaison de deux radicaux kanji agencés dans le sens de chaîne de caractères de l'image de chaîne de caractères, la section de détermination de largeur de caractère standard exclut la mesure de largeur de caractère du caractère de combinaison de la mesure de largeur de caractère utilisée pour déterminer la largeur de caractère standard,
dans lequel, si le caractère provisoirement reconnu par le processus de correspondance provisoire est un radical kanji pour former un caractère de combinaison lorsqu'il est combiné avec un caractère à l'avant ou à l'arrière dans le sens de chaîne de caractères par rapport au caractère, la section de détermination de largeur de caractère standard exclut la mesure de largeur de caractère du radical kanji de la mesure de largeur de caractère utilisée pour déterminer la largeur de caractère standard, et
dans lequel, si l'exclusion de la mesure de largeur de caractère du caractère de combinaison ou du radical kanji a pour conséquence que la mesure de largeur de caractère utilisée pour déterminer la largeur de caractère standard est égale à zéro, la section de détermination de largeur de caractère standard détermine la largeur de caractère standard sur la base de la largeur de caractère dans un sens perpendiculaire au sens de chaîne de caractères.

2. Dispositif selon la revendication 1, comprenant en outre :
une section de découpage de caractère pour découper des caractères en succession, en commençant par le premier caractère dans l'image de chaîne de caractères, à reconnaître à partir de l'image de chaîne de caractères sur la base de la largeur de caractère standard déterminée ; et
une section de reconnaissance de caractères pour reconnaître réellement les caractères découpés par l'intermédiaire d'un processus de correspondance réelle,
dans lequel
la section de découpage de caractère crée des données de projection dans lesquelles l'image de chaîne de caractère est projetée dans un sens perpendiculaire au sens de chaîne de caractères, et exécute un premier processus de découpage consistant à découper le premier caractère dans lequel une largeur de caractère provisoire d'une coupure ou d'une vallée respectivement à une coupure suivante ou à une vallée suivante des données de projection correspond à la largeur de caractère standard avec une tolérance d'une erreur prédéterminée ;
la section de reconnaissance de caractères effectue un processus de correspondance réelle de caractère de largeur complète consistant à mettre le premier caractère découpé en correspondance avec un caractère de largeur complète dans le cadre du processus de correspondance réelle ;
si une fiabilité de correspondance dans le processus de correspondance réelle de caractère de largeur complète est inférieure à une valeur de seuil prédéterminée, la section de découpage de caractère exécute un deuxième processus de découpage consistant à découper un caractère de demi-largeur dans lequel une plage prédéterminée depuis une partie avant du caractère et l'erreur prédéterminée de la largeur de caractère standard depuis une partie arrière du caractère sont découpées ;
la section de reconnaissance de caractères effectue un processus de correspondance réelle de caractère de demi-largeur consistant à mettre le caractère découpé en correspondance avec un caractère de demi-largeur dans le cadre du processus de correspondance réelle ;
si la fiabilité de correspondance dans le processus de correspondance réelle de caractère de largeur complète est supérieure à la valeur de seuil prédéterminée, le caractère qui correspond est adopté et la section de reconnaissance de caractères suppose que la reconnaissance est réussie ; et
la section de découpage de caractère découpe le caractère suivant dans l'image de chaîne de caractères jusqu'à ce que le caractère adopté soit le caractère à la fin de l'image de chaîne de caractères.

3. Dispositif selon la revendication 2, dans lequel l'erreur prédéterminée est un quart de la largeur de caractère standard.

4. Dispositif selon la revendication 2, dans lequel l'erreur prédéterminée est un seizième de la largeur de caractère standard.

5. Programme d'estimation d'une largeur de caractère standard dans une chaîne de caractères pour amener un ordinateur à exécuter :
une étape d'acquisition de chaîne de caractères consistant à acquérir une image de chaîne de caractères avec une unité d'acquisition d'image de chaîne de caractères ;
une étape d'acquisition de mesure de largeur de caractère pour acquérir des mesures de largeur de caractère en mesurant des largeurs de caractère dans un sens de chaîne de caractères par rapport à une pluralité de caractères à partir de l'image de chaîne de caractères ;
une étape de reconnaissance provisoire de caractère consistant à reconnaître provisoirement les caractères ayant les largeurs de caractère mesurées par l'intermédiaire d'un processus de correspondance provisoire ; et
une étape de détermination de largeur de caractère standard pour déterminer une largeur de caractère standard sur la base des mesures de largeur de caractère des caractères provisoirement reconnus, dans laquelle la largeur de caractère standard est une largeur de caractère moyenne ;
dans lequel le processus de correspondance provisoire est censé reconnaître correctement un caractère si la fiabilité de correspondance est supérieure ou égale à une valeur de seuil prédéterminée,
dans lequel, si le caractère provisoirement reconnu par le processus de correspondance provisoire est un caractère de combinaison formé par la combinaison de deux radicaux agencés dans le sens de chaîne de caractères de l'image de chaîne de caractères, l'étape de détermination de largeur de caractère standard comprend en outre l'exclusion de la mesure de largeur de caractère du caractère de combinaison de la mesure de largeur de caractère utilisée pour déterminer la largeur de caractère standard,
dans lequel, si le caractère provisoirement reconnu par le processus de correspondance provisoire est un radical kanji pour former un caractère de combinaison lorsqu'il est combiné avec un caractère à l'avant ou à l'arrière dans le sens de chaîne de caractères par rapport au caractère, la section de détermination de largeur de caractère standard exclut la mesure de largeur de caractère du radical kanji de la mesure de largeur de caractère utilisée pour déterminer la largeur de caractère standard, et
dans lequel, si l'exclusion de la mesure de largeur de caractère du caractère de combinaison ou du radical kanji a pour conséquence que la mesure de largeur de caractère utilisée pour déterminer la largeur de caractère standard est égale à zéro, l'étape de détermination de largeur de caractère standard comprend en outre la détermination de la largeur de caractère standard sur la base de la largeur de caractère dans un sens perpendiculaire au sens de la chaîne de caractères.

6. Programme selon la revendication 5, pour amener un ordinateur à exécuter en outre :
une étape de découpage de caractère consistant à découper des caractères en succession, en commençant par le premier caractère dans l'image de chaîne de caractères, à reconnaître à partir de l'image de chaîne de caractères sur la base de la largeur de caractère standard déterminée ; et
une étape de reconnaissance de caractères pour reconnaître réellement les caractères découpés par l'intermédiaire d'un processus de correspondance réelle,
dans lequel
l'étape de découpage de caractère comprend la création de données de projection dans lesquelles l'image de chaîne de caractère est projetée dans un sens perpendiculaire au sens de chaîne de caractères, et l'exécution d'un premier processus de découpage consistant à découper le premier caractère dans lequel une largeur de caractère provisoire d'une coupure ou d'une vallée respectivement à une coupure suivante ou à une vallée suivante des données de projection correspond à la largeur de caractère standard avec une tolérance d'une erreur prédéterminée ;
l'étape de reconnaissance de caractères comprend l'exécution d'un processus de correspondance réelle de caractère de largeur complète consistant à mettre le premier caractère découpé en correspondance avec un caractère de largeur complète dans le cadre du processus de correspondance réelle ;
si une fiabilité de correspondance dans le processus de correspondance réelle de caractère de largeur complète est inférieure à une valeur de seuil prédéterminée, l'étape de découpage de caractère comprend l'exécution d'un deuxième processus de découpage consistant à découper un caractère de demi-largeur dans lequel une plage prédéterminée depuis une partie avant du caractère et l'erreur prédéterminée de la largeur de caractère standard depuis une partie arrière du caractère sont découpées ;
l'étape de reconnaissance de caractères comprend l'exécution d'un processus de correspondance réelle de caractère de demi-largeur consistant à mettre le caractère découpé en correspondance avec un caractère de demi-largeur dans le cadre du processus de correspondance réelle ;
si la fiabilité de correspondance dans le processus de correspondance réelle de caractère de largeur complète est supérieure à la valeur de seuil prédéterminée, le caractère qui correspond est adopté et l'étape de reconnaissance de caractères comprend la supposition que la reconnaissance est réussie ; et
l'étape de découpage de caractère comprend le découpage du caractère suivant dans l'image de chaîne de caractères jusqu'à ce que le caractère adopté soit le caractère à la fin de l'image de chaîne de caractères.

7. Procédé d'estimation d'une largeur de caractère standard dans une chaîne de caractères, le procédé comprenant les étapes de :
l'acquisition d'une image de chaîne de caractères avec une unité d'acquisition d'image de chaîne de caractères ;
l'acquisition de mesures de largeur de caractère en mesurant des largeurs de caractère dans un sens de chaîne de caractères par rapport à une pluralité de caractères à partir de l'image de chaîne de caractères ;
la reconnaissance provisoire des caractères ayant les largeurs de caractère mesurées par l'intermédiaire d'un processus de correspondance provisoire ; et
la détermination d'une largeur de caractère standard sur la base des mesures de largeur de caractère des caractères provisoirement reconnus, dans laquelle la largeur de caractère standard est une largeur de caractère moyenne ;
dans lequel le processus de correspondance provisoire est censé reconnaître correctement un caractère si la fiabilité de correspondance est supérieure ou égale à une valeur de seuil prédéterminée,
dans lequel, si le caractère provisoirement reconnu est un caractère de combinaison formé par la combinaison de deux radicaux agencés dans le sens de chaîne de caractères de l'image de chaîne de caractères, la détermination de largeur de caractère standard comprend en outre l'exclusion de la mesure de largeur de caractère du caractère de combinaison de la mesure de largeur de caractère utilisée pour déterminer la largeur de caractère standard,
dans lequel, si le caractère provisoirement reconnu par le processus de correspondance provisoire est un radical kanji pour former un caractère de combinaison lorsqu'il est combiné avec un caractère à l'avant ou à l'arrière dans le sens de chaîne de caractères par rapport au caractère, la section de détermination de largeur de caractère standard exclut la mesure de largeur de caractère du radical kanji de la mesure de largeur de caractère utilisée pour déterminer la largeur de caractère standard, et
dans lequel, si l'exclusion de la mesure de largeur de caractère du caractère de combinaison ou du radical kanji a pour conséquence que la mesure de largeur de caractère utilisée pour déterminer la largeur de caractère standard est égale à zéro, la détermination de la largeur de caractère standard comprend en outre la détermination de la largeur de caractère standard sur la base de la largeur de caractère dans un sens perpendiculaire au sens de chaîne de caractères.

8. Procédé selon la revendication 7, comprenant en outre :
le découpage de caractères en succession, en commençant par le premier caractère dans l'image de chaîne de caractères, à reconnaître à partir de l'image de chaîne de caractères sur la base de la largeur de caractère standard déterminée ; et
la reconnaissance réelle des caractères découpés par l'intermédiaire d'un processus de correspondance réelle,
dans lequel
le découpage comprend la création de données de projection dans lesquelles l'image de chaîne de caractère est projetée dans un sens perpendiculaire au sens de chaîne de caractères, et l'exécution d'un premier processus de découpage consistant à découper le premier caractère dans lequel une largeur de caractère provisoire d'une coupure ou d'une vallée respectivement à une coupure suivante ou à une vallée suivante des données de projection correspond à la largeur de caractère standard avec une tolérance d'une erreur prédéterminée ;
la reconnaissance comprend l'exécution d'un processus de correspondance réelle de caractère de largeur complète consistant à mettre le premier caractère découpé en correspondance avec un caractère de largeur complète dans le cadre du processus de correspondance réelle ;
si une fiabilité de correspondance dans le processus de correspondance réelle de caractère de largeur complète est inférieure à une valeur de seuil prédéterminée, le découpage comprend l'exécution d'un deuxième processus de découpage consistant à découper un caractère de demi-largeur dans lequel une plage prédéterminée depuis une partie avant du caractère et l'erreur prédéterminée de la largeur de caractère standard depuis une partie arrière du caractère sont découpées ;
la reconnaissance comprend l'exécution d'un processus de correspondance réelle de caractère de demi-largeur consistant à mettre le caractère découpé en correspondance avec un caractère de demi-largeur dans le cadre du processus de correspondance réelle ;
si la fiabilité de correspondance dans le processus de correspondance réelle de caractère de largeur complète est supérieure à la valeur de seuil prédéterminée, l'adoption du caractère qui correspond et la supposition que la reconnaissance est réussie ; et
le découpage du caractère suivant dans l'image de chaîne de caractères jusqu'à ce que le caractère adopté soit le caractère à la fin de l'image de chaîne de caractères.
